# EUROPÄISCHE PATENTSCHRIFT

(11) **EP 0 377 885 B1**
(45) Veröffentlichungstag und Bekanntmachung des Hinweises auf die Patenterteilung: **04.08.1993**
(21) Anmeldenummer: 89123774.5
(22) Anmeldetag: 22.12.1989
(51) Int. Cl.: A01B 29/06, B60C 17/04, B60C 13/00

(54) **Bodenwalze und Reifen für solch eine Bodenwalze**
Ground roller and tyre for such a ground roller
Rouleau et pneu pour un tel rouleau

(30) Priorität: 13.01.1989 DE 3900819
(43) Veröffentlichungstag der Anmeldung: 18.07.1990
(73) Patentinhaber: Amazonen-Werke H. Dreyer GmbH & Co. KG, D-49205 Hasbergen (DE)
(72) Erfinder: Siefken, Claus, D-2875 Ganderkesee 1 (DE)

(56) Entgegenhaltungen:
- EP-A- 0 245 648
- US-A- 3 190 339

## Beschreibung

Die Erfindung betrifft eine Bodenwalze gemäß des Oberbegriffes des Patentanspruches 1, sowie einen entsprechenden Reifen dafür.

Derartige Bodenwalzen und Reifen sind beispielsweise durch die europäische Patentanmeldung 02 45 648 bekannt.

Eine deraritige Bodenwalze hat sich im praktischen Ansatz bereits bewährt.

Nun hat sich jedoch beim Einsatz derartiger Bodenwalze vor allem auf steinigen Böden gezeigt, daß bei der aus gebrauchten PKW-Reifen bestehende Bodenwalze die Reifen durch die Steine zu schnell beschädigt werden. Es ist dem Landwirt nicht zuzumuten, in derartig kurzen Abständen bei diesen extremen Einsatzbedingungen die durch Steine beschädigten Reifen gegen "neue" gebrauchte Reifen auszutauschen.

Der Erfindung liegt die Aufgabe zugrunde, in kostengünstiger Weise einen insbesondere gegen Steinschäden unempfindlichen Reifen für eine Bodenwalze zu schaffen.

Diese Aufgabe wird erfindungsgemäß durch die kennzeichnenden Maßnahmen des Patentanspruches 1 gelöst.

Infolge dieser Maßnahmen wird auf einfachste und kostengünstige Weise durch die auf den Außenseiten der Seitenflanken der Reifen aufvulkanisierte Gummischicht eine wirkungsvolle Seitenflankenverstärkung des Reifens erreicht, so daß Reifenschäden durch Steine oder andere Fremdkörper, die sich u.a. zwischen benachbarten Reifen klemmen können, vermieden werden. Hierbei ist von entscheidender Bedeutung, um eine gute Selbstreinigung der Gummireifen nach wie vor zu erhalten, daß auf der Lauffläche möglichst wenig Gummi aufvulkanisiert ist, um so die Reifenwalkung nicht zu vermindern. Von daher ist auf den Seitenflanken eine dickere Gummischicht als auf der Lauffläche aufvulkanisiert.

Des weiteren soll nach der Erfindung ein Reifen für eine Bodenwalze mit nebeneinander auf einem Traggerüst angeordneten Reifen geschaffen werden. Hierzu sind die kennzeichnenden Merkmale des Anspruches 4 vorgesehen. Hierbei ist insbesondere auf den Seitenflanken zumindest eine 3 mm starke Gummischicht aufvulkanisiert ist. Dieser Reifen läßt sich dann in vorteilhafter Weise kostengünstig herstellen und in der erfindungsgemäßen Bodenwalze einsetzen.

Diese erfindungsgemäße Bodenwalze läßt sich als Nachlaufwalze beispielsweise hinter Bodenbearbeitungsgeräten, insbesondere zapfwellenangetriebene Bodenbearbeitungsmaschinen wie Kreiseleggen, Bodenfräsen, Rotorkrümleeggen, etc. einsetzen.

Die Erfindung wird anhand eines Ausführungsbeispieles näher erläutert. Hierbei zeigen
- Fig. 1: eine Gerätekombination mit erfindungsgemäß ausgebildeter Bodenwalze, in der Seitenansicht,
- Fig. 2: die erfindungsgemäß ausgebildete Bodenwalze mit einer aufgesattelten Drillmaschine in der Ansicht II - II,
- Fig. 3: eine Teilansicht der erfindungsgemäßen Bodenwalze, wobei ein Reifen im Schnitt dargestellt ist, sowie in der Ansicht von vorne und
- Fig. 4: einen Reifenquerschnitt in erfindungsgemäßer Weise und in vergrößerter Darstellung.

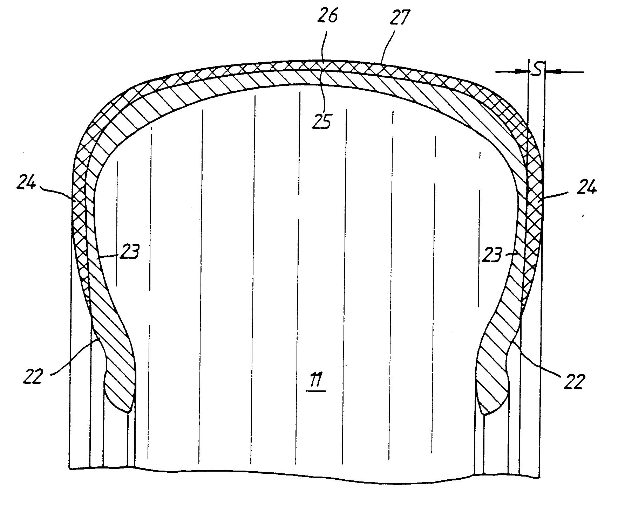

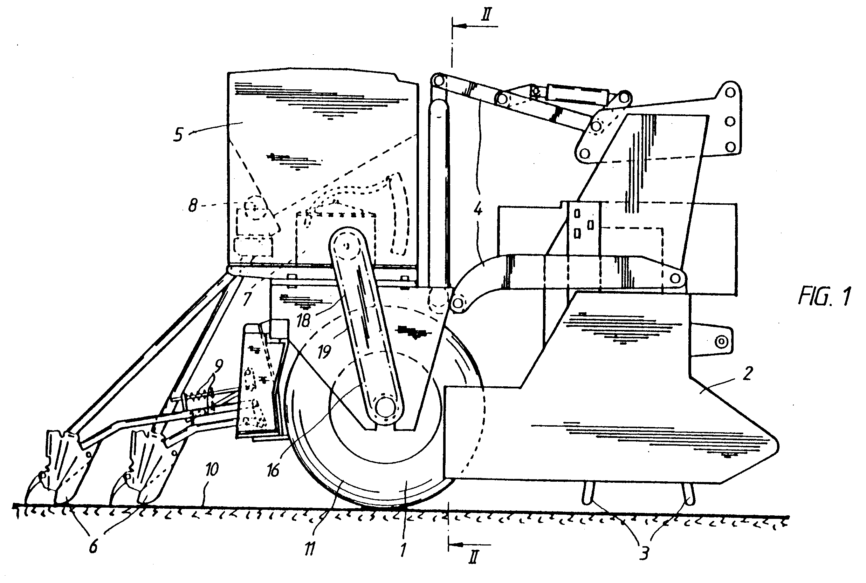

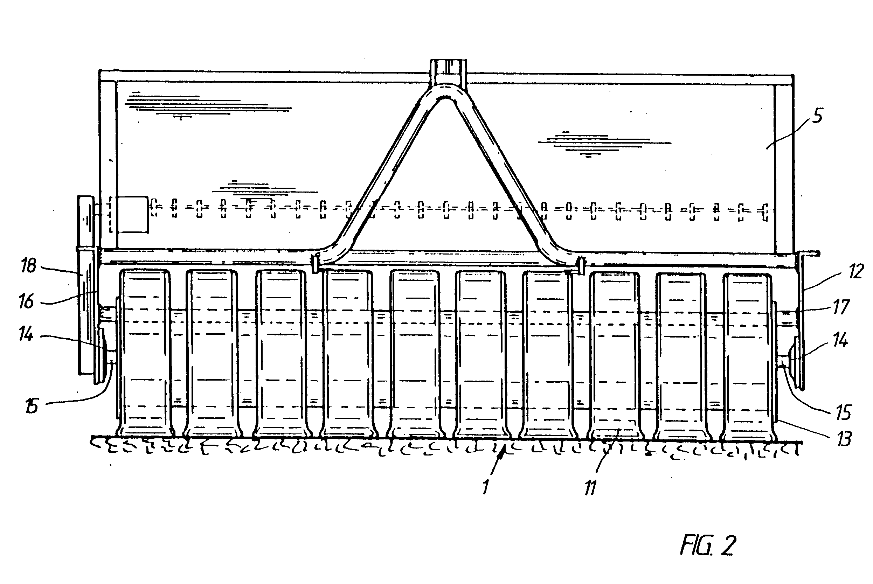

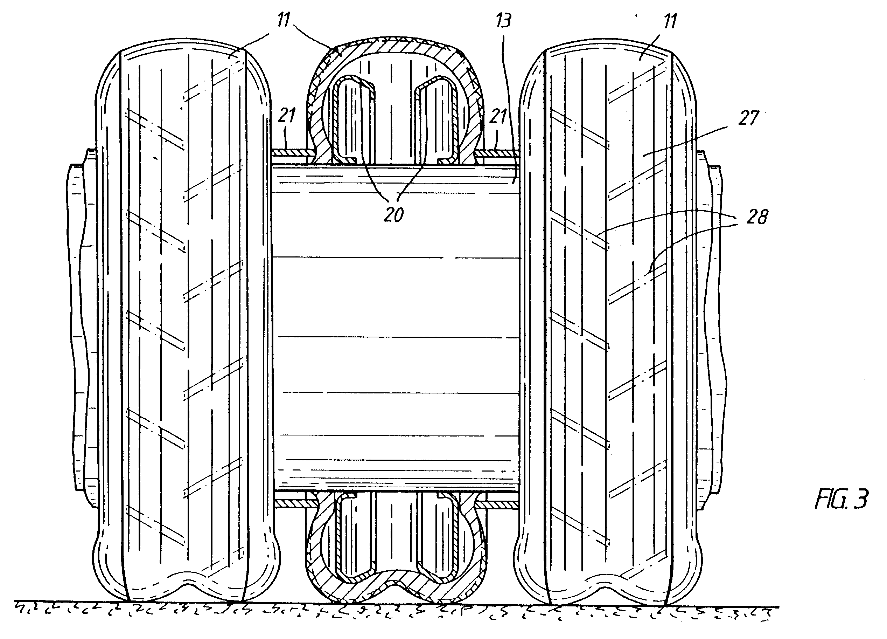

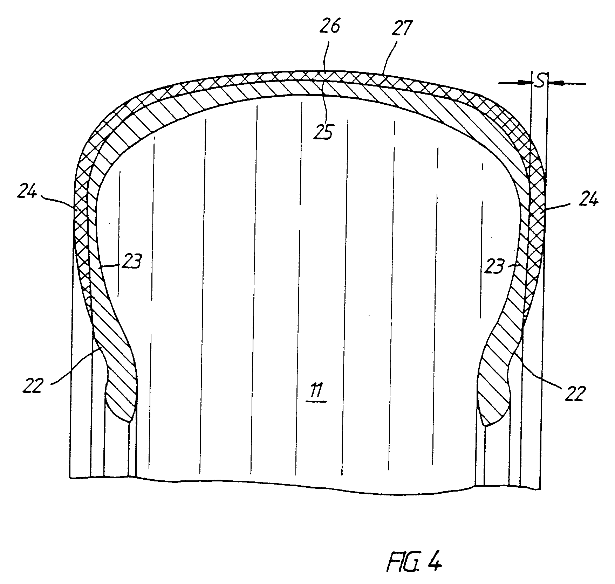

Die Bodenwalze 1 ist Bestandteil der landwirtschaftlichen Gerätekombination gemäß Fig. 1. Diese Gerätekombination besteht aus der schleppergetriebenen und zapfwellenangetriebenen Bodenbearbeitungsmaschine 2, die als Kreiselegge ausgebildet ist, der hinter den Bodenbearbeitungswerkzeugen 3 der Bodenbearbeitungsmaschine über das Dreipunktgestänge 4 angeordneten Bodenwalze 1 mit der aufgesattelten Drillmaschine 5. Die Bodenwalze 1 ist somit als Nachlaufwalze hinter der Bodenbearbeitungsmaschine 2 angeordnet und bestimmt so die Arbeitstiefe der Bodenbearbeitungswerkzeuge 3 und ist gleichzeitig als Fahrwerk für die Drillmaschine 5 ausgebildet. Die Drillmaschine 5 weist die Säschare 6, die in zwei hintereinander liegenden Querreihen angeordnet sind, auf. Von der Bodenwalze 1 aus werden über den regelbaren Antrieb 7 die Dosierorgane 8 der Drillmaschine 5 angetrieben. Die Säschare 6 werden durch die Schardruckfedern 9 gegen den Boden 10 gedrückt.

Die Bodenwalze 1 besteht aus den nebeneinander angeordneten Gummireifen 11, die auf dem drehbar gelagerten Traggerüst 12 angeordnet sind. Das Traggerüst 12 ist als Tragrohr 13 ausgebildet, welches über die Lager 14 und die Lagerzapfen 15 über den seitlichen Tragarmen 16 und 17 drehbar angeordnet ist, wobei der Tragarm 16 als Lagergehäuse 18 für den Antrieb 19 des Regelgetriebes 7 ausgebildet ist.

Auf dem durchgehenden Tragrohr 13 sind die Gummireifen 11 nebeneinander angeordnet. Das Tragrohr 13 weist einen Außendurchmesser auf, der in etwa dem Innendruchmesser der Gummireifen 11 entspricht. Somit sind also die Gummireifen 11 sehr einfach auf dem Tragrohr 13 von der Seite her aufzuschieben. In dem Innern der Gummireifen 11 sind die beiden Abstützringe 20 jeweils in einem Abstand zueinander angeordnet. Zwischen jeweils zwei benachbarten Reifen sind die Gummireifen11 durch den Abstandsring 21 in einem bestimmten Abstand zueinander angeordnet. Durch diese Anordnung wird ebenfalls sichergestellt, daß kein Erdreich in das Innere der Gummireifen 11 eindringen kann. Diese Gummireifen 11 sind gebraucht oder herkömmliche PKW-Reifen.

Auf den beiden Außenseiten 22 der Seitenflanken 23 der Reifen 11 ist eine den Reifen 11 schützende Gummischicht 24 aufvulkanisiert. Ebenfalls ist auf der Lauffläche 25 der Reifen 11 eine Gummischicht 26 aufvulkanisiert. Die auf den Seitenflanken 23 aufvulkanisierte Gummischicht 24 weist eine Stärke S von zumindest 3 mm, vorzugsweise 4 bis 6 mm auf. Die auf den Seitenflanken 23 aufvulkanisierte Gummischicht 24 ist wesentlich dicker als die auf der Lauffläche 25 aufvulkanisierte Gummischicht 26. Des weiteren befindet sich auf der aufvulkanisierten Lauffläche 27 der Reifen 11 ein mit strichpunktierten Linien angedeutetes Profil mit schräg angestellten Stollen 28.

Durch die auf den Seitenflanken 23 aufvulkanisierte dicke Gummischicht 24 von zumindest 3 mm wird gewährleistet, daß sich eine Seitenflankenverstärkung ergibt, um so daß Reifenschäden, die insbesondere durch Steine im Seitenflankenbereich der Reifen 11 hervorgerufen werden, in sicherer und kostengünstiger Weise vermieden werden. Diese Reifen 11 sind somit kostengünstig gegen Steinschäden unempfindlich. Es wird eine sehr lange Lebensdauer durch eine kostengünstige Maßnahme erreicht.

## Patentansprüche

1. Bodenwalze bestehend aus mehreren nebeneinander angeordneten drucklosen Gummireifen (10), insbesondere gebrauchte PKW-Reifen, welche in einem Abstand zueinander auf einem Traggerüst (12) angeordnet sind, wobei im Inneren der Gummireifen (11) die Lauffläche (25) von innen abstützende Stützelemente (20) angeordnet sind, dadurch gekennzeichnet, daß auf den Außenseiten (22) der Seitenflanken (23) und auf der Lauffläche (25) der Gummireifen (11) eine den Reifen schützende zusätzliche Gummischicht (24,26) aufvulkanisiert ist.

2. Bodenwalze nach Anspruch 1, dadurch gekennzeichnet, daß die Stärke (S) der Gummischicht (24) auf den Seitenflanken (23) mindestens 3 mm, vorzugsweise 4 - 6 mm beträgt.

3. Bodenwalze nach Anspruch 1, dadurch gekennzeichnet, daß die Gummischicht (24) der Seitenflanken (23) dicker als die Gummischicht (26) auf der Lauffläche (25) ist.

4. Reifen für Bodenwalzen mit aus auf einem Traggerüst nebeinander angeordneten drucklosen Reifen, dadurch gekennzeichnet, daß auf den Außenseiten (22) der Seitenflanken (23) und auf der Lauffläche (25) der Gummireifen (11) eine den Reifen (11) schützende zusätzliche Gummischicht aufvulkanisiert ist.

## Claims

1. Ground roller, including a plurality of pressureless rubber tyres (11), more especially used passenger vehicle tyres, which lie adjacent one another and are disposed on a supporting frame (12) with spacings therebetween, supporting members (20), which support the tread surface (25) from internally, being disposed in the interior of the rubber tyres (11), characterised in that an additional layer of rubber (24, 26), which protects the tyre, is vulcanised on the external surfaces (22) of the lateral walls (23) and on the tread surface (25) of the rubber tyres (11).

2. Ground roller according to claim 1, characterised in that the thickness (S) of the layer of rubber (24) on the lateral walls (23) is at least 3 mm, preferably 4 - 6 mm.

3. Ground roller according to claim 1, characterised in that the layer of rubber (24) on the lateral walls (23) is thicker than the layer of rubber (26 on the tread surface (25).

4. Tyre for ground rollers having pressureless tyres disposed adjacent one another on a supporting frame, characterised in that an additional layer of rubber, which protects the tyre (11), is vulcanised on the external surfaces (22) of the lateral walls (23) and on the tread surface (25) of the rubber tyres (11).

## Revendications

1. Rouleau compacteur composé de plusieurs pneumatiques (10) sans pression, juxtaposés, notamment des pneumatiques de véhicules automobiles usagés, ces pneumatiques étant disposés à intervalle sur une ossature de support (12), et à l'intérieur des pneumatiques (11), on a des éléments de soutien (20) qui soutiennent par l'intérieur la bande de roulement (25), rouleau caractérisé en ce que sur la face extérieure (22) des flancs (23) et de la bande de roulement (25) des pneumatiques (11) on a vulcanisé une couche de caoutchouc (24, 26) supplémentaire protégeant le pneumatique.

2. Rouleau compacteur selon la revendication 1, caractérisé en ce que l'épaisseur (S) de la couche de caoutchouc (24) prévue sur les flancs (23) est au moins égale à 3 mm et est de préférence comprise entre 4 et 6 mm.

3. Rouleau compacteur selon la revendication 1, caractérisé en ce que la couche de caoutchouc (24) des flancs (23) est plus épaisse que la couche de caoutchouc (26) de la bande de roulement (25).

4. Pneumatique pour rouleau compacteur des pneumatiques sans pression juxtaposés sur une ossature de support, caractérisé en ce que sur les faces extérieures (22) des flancs (23) et la bande de roulement (25) des pneumatiques (11) on a vulcanisé une couche de caoutchouc supplémentaire protégeant les pneumatiques (11).
